# EUROPEAN PATENT APPLICATION

(11) **EP 4 715 225 A1**
(43) Date of publication of application: **25.03.2026**
(21) Application number: 25203378.2
(22) Date of filing: 19.09.2025
(51) Int. Cl.: F16B 5/02, B64D 27/40, B64D 37/04

(54) **ASSEMBLY AND METHOD FOR CONNECTING AIRCRAFT COMPONENTS TOGETHER**

(30) Priority: 19.09.2024 US 202418890284
(71) Applicant: PRATT & WHITNEY CANADA CORP., Longueuil, Québec J4G 1A1 (CA)
(72) Inventor: GIGNAC, Stephane, (01BE5) Longueuil, J4G 1A1 (CA); RADON, Joanna, (01BE5) Longueuil, J4G 1A1 (CA)
(74) Representative: Dehns

(57) **Abstract**

An assembly is provided for an aircraft. This aircraft assembly includes a fluid reservoir structure, an aircraft engine housing structure and a mounting assembly (20). The fluid reservoir structure includes a first mount (28). The aircraft engine housing structure includes a second mount (30). The mounting assembly (20) connects the first mount (28) to the second mount (30) while providing controlled intercomponent movement between the first mount (28) and the second mount (30) to reduce internal stress and/or wear. The mounting assembly (20) includes a first bushing (32), a second bushing (34) and a fastener (36).

## Description

### TECHNICAL FIELD

This disclosure relates generally to an aircraft and, more particularly, to mounting aircraft components together.

### BACKGROUND INFORMATION

Various mounting assemblies are known in the art for connecting aircraft components together. While these known mounting assemblies have various benefits, there is still room in the art for improvement.

### SUMMARY

According to an aspect of the present disclosure, an assembly is provided for an aircraft. This aircraft assembly includes a fluid reservoir structure, an aircraft engine housing structure and a mounting assembly. The fluid reservoir structure includes a first mount. The first mount includes a first mount aperture that extends axially along an axis through the first mount from a first mount first side to a first mount second side. The aircraft engine housing structure includes a second mount. The second mount includes a second mount aperture that extends axially along the axis through the second mount from a second mount first side to a second mount second side. The mounting assembly connects the first mount to the second mount while providing controlled intercomponent movement between the first mount and the second mount to reduce internal stress and/or wear. The mounting assembly includes a first bushing, a second bushing and a fastener. The first bushing includes a first bushing bore, a first bushing base and a first bushing rim that projects radially out from the first bushing base. The first bushing base projects partially axially into the first mount aperture without contacting the second bushing. The first bushing rim is axially next to the first mount first side. The second bushing includes a second bushing bore, a second bushing base and a second bushing rim that projects radially out from the second bushing base. The second bushing base projects partially axially into the second mount aperture. The second bushing rim is axially next to and between the first mount second side and the second mount first side. The fastener projects axially through the first bushing bore and the second bushing bore.

According to another aspect of the present disclosure, an aircraft assembly is provided for providing controlled intercomponent movement to reduce internal stress and/or wear. This aircraft assembly includes a shoulder fastener, a first bushing, a second bushing, a nut and a washer. The shoulder fastener includes a head, a shoulder section and a threaded section. The shoulder section projects axially along an axis from the head to the threaded section. The first bushing has a first bushing axial thickness that extends axially from a first bushing first end to a first bushing second end. The first bushing includes a first bushing base and a first bushing rim disposed at the first bushing first end. The first bushing base is mounted on the shoulder section. The first bushing rim projects radially out from and circumscribes the first bushing base. The second bushing has a second bushing axial thickness that extends axially from a second bushing first end to a second bushing second end. The second bushing includes a second bushing base and a second bushing rim disposed at the second bushing first end. The second bushing base is mounted on the shoulder section. The second bushing rim projects radially out from and circumscribes the second bushing base. The second bushing first end is located axially next to the first bushing second end. The second bushing second end is located axially next to the head. The nut is threaded onto the threaded section. The washer is clamped between the nut and an axial end of the shoulder section. The washer is axially next to the first bushing first end. An axial distance extending from the washer to the head is greater than a sum of the first bushing axial thickness and the second bushing axial thickness.

According to still another aspect of the present disclosure, a method is provided for attaching components together while providing controlled intercomponent movement to reduce internal stress and/or wear. This method includes: inserting a base of a first bushing into an aperture in a first mount with a rim of the first bushing axially engaging the first mount, the first mount having a first mount axial thickness, and the rim of the first bushing having a first bushing rim axial thickness; inserting a base of a second bushing into an aperture in a second mount with a rim of the second bushing axially engaging the second mount, the second mount having a second mount axial thickness, and the rim of the second bushing having a second bushing rim axial thickness; inserting a shoulder section of a fastener through a bore of the first bushing and a bore of the second bushing, a head of the fastener axially next to the second mount, and the rim of the second bushing axially next to the first mount; determining a stack dimension, the stack dimension equal to a sum of the first mount axial thickness, the first bushing rim axial thickness, the second mount axial thickness and the second bushing rim axial thickness; selecting a washer out of a set of washers with different configurations based on the stack dimension; mounting the washer on a threaded section of the fastener, the washer axially next to the first bushing; and threading a nut onto the threaded section of the fastener to axially clamp the washer between the nut and an axial end of the shoulder section of the fastener.

The following optional features may be applied to any of the above aspects.

The washer may be configured as or otherwise include a flat washer.

A portion of the washer may axially overlap and circumscribe the shoulder section. The axial distance may extend from the portion of the washer to the head.

The aircraft assembly may also include a first mount and a second mount. The first mount may include a first mount aperture. The first bushing base may project axially into the first mount aperture. The first bushing rim may axially engage the first mount. The first mount may be captured axially between the first bushing rim and the second bushing. The second mount may include a second mount aperture. The second bushing base may project axially into the second mount aperture. The second bushing rim may axially engage the second mount. The second mount may be captured axially between the second bushing rim and the head.

The first bushing base may be fixed to the first mount through a radial interference fit.

The second bushing base may be fixed to the second mount through a radial interference fit.

The first mount may be axially captured between the first bushing rim and the second bushing rim.

The fastener may include a head and a shank. The head may be axially next to the second mount second side. The shank may project axially out from the head and through the first bushing bore and the second bushing bore.

The shank may include a threaded section and a shoulder section projecting axially through the first bushing bore and the second bushing bore from the head to the threaded section. The mounting assembly may also include a nut threaded onto the threaded section with the first bushing axially captured between the nut and the first mount.

The mounting assembly may also include a washer axially next to and between the nut and an end of the shoulder section. The first bushing may be axially next to and between the washer and the first mount.

The washer may be axially clamped between the nut and the end of the shoulder section.

The shoulder section may have an axial length. A sum of an axial thickness of the first bushing rim, an axial thickness of the first mount, an axial thickness of the second bushing rim and an axial thickness of the second mount may be less than the axial length of the shoulder section.

The washer may have a uniform axial thickness extending radially from an inner side of the washer to an outer side of the washer.

The washer may include a washer base and a washer shoulder. The washer base may be axially between and engage the nut and the end of the shoulder section. The washer shoulder may project axially out from the washer base towards the first bushing. The washer shoulder may circumscribe the shoulder section.

An axial thickness of the washer base may be greater than an axial thickness of the washer shoulder.

The washer shoulder may be operable to axially contact the first bushing.

The assembly may also include a housing structure for an aircraft engine. The housing structure may include one of the first mount or the second mount.

The assembly may also include a fluid reservoir structure. The fluid reservoir structure may include one of the first mount or the second mount.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a sectional illustration of a mounting assembly connecting a tank mount to a case mount.
FIG. 2 is a sectional illustration of a tank mount bushing mounted to the tank mount.
FIG. 3 is a partial sectional illustration of a case mount bushing mounted to the case mount.
FIG. 4 is a sectional illustration of a fastener.
FIG. 5 is a partial sectional illustration of a washer.
FIG. 6 are partial sectional illustrations of a set of washers with various configurations.
FIG. 7 is a partial sectional illustration of the mounting assembly connecting the tank mount to the case mount with another washer configuration.

### DETAILED DESCRIPTION

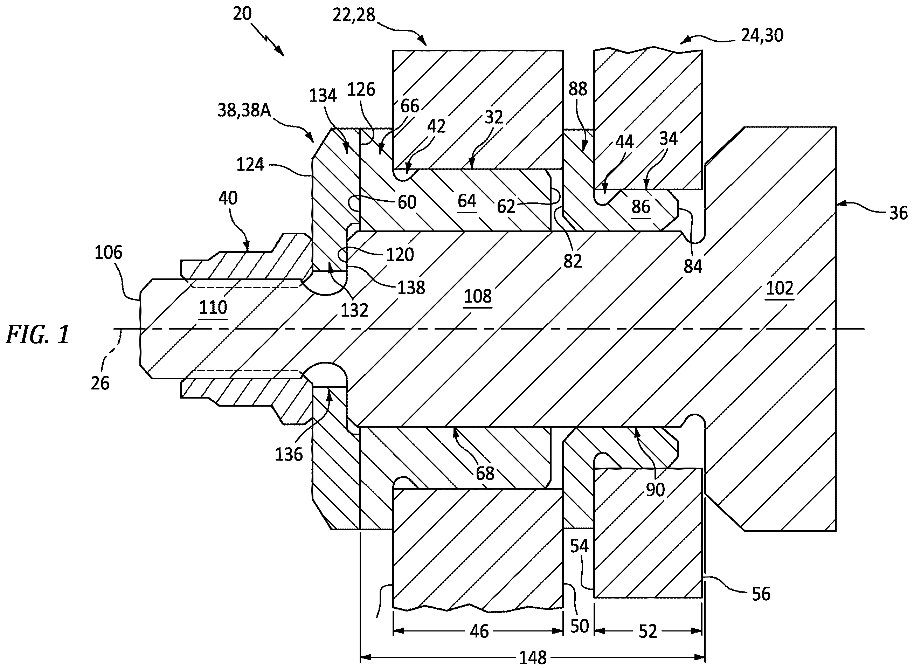

FIG. 1 illustrates a mounting assembly 20 for a powerplant of an aircraft. The aircraft may be an airplane, a helicopter, a drone (e.g., an unmanned aerial vehicle (UAV)) or any other manned or unmanned aerial vehicle or system. The aircraft powerplant may be configured as, or otherwise included as part of, a propulsion system for the aircraft. The aircraft powerplant, for example, may be a turbofan engine, a turbojet engine, a turboprop engine, a turboshaft engine, a rotary engine (e.g., a Wankel engine), a reciprocating piston engine, or any other type of combustion engine configured to generate thrust and/or drive rotation of a ducted or open propulsor rotor configured to generate thrust. The aircraft powerplant may alternatively (or also) be configured as, or otherwise included as part of, a power generation system for the aircraft. The aircraft powerplant, for example, may be an auxiliary power unit (APU) or any other type of combustion engine configured to mechanically power operation of an electrical generator. The present disclosure, however, is not limited to such exemplary combustion engine powerplants. The combustion engine of the aircraft powerplant, for example, may be replaced by or may be paired with an electric machine and/or any other type of power unit. Moreover, it is contemplated the mounting assembly 20 of the present disclosure may be utilized for non-aircraft powerplant applications.

The mounting assembly 20 of FIG. 1 is configured to connect a first component 22 of the aircraft powerplant to a second component 24 of the aircraft powerplant along an axis 26. For ease of description, the first component 22 is described below as a fluid reservoir structure such as a lubricant tank with a tank mount 28; e.g., a mounting flange. Also for ease of description, the second component 24 is described below as a housing structure for the power unit (e.g., combustion engine, electric machine, etc.) such as a casing with a case mount 30; e.g., a mounting flange. It is contemplated, however, the mounting assembly 20 may alternatively connect together various other components of the aircraft powerplant and, more generally, various other components of the aircraft. The mounting assembly 20 of FIG. 1 includes an assembly tank mount bushing 32, an assembly case mount bushing 34, an assembly fastener 36, an assembly washer 38 and an assembly nut 40. The axis 26 may be a centerline axis of the mounting assembly 20. More particularly, the axis 26 may be a centerline axis of one or more or all of the mounting assembly members 32, 34, 36, 38 and 40. The axis 26 may also be a centerline axis of an aperture 42 in the tank mount 28 and/or an aperture 44 in the case mount 30.

The tank mount 28 has an axial thickness 46 that extends axially along the axis 26 from an axial first side 48 of the tank mount 28 to an axial second side 50 of the tank mount 28, where the tank mount second side 50 is arranged axially opposite the tank mount first side 48 along the axis 26. The tank mount aperture 42 is configured as a through-hole in the tank mount 28. More particularly, the tank mount aperture 42 extends axially along the axis 26 through the tank mount 28 between the opposing axial tank mount sides 48 and 50. This tank mount aperture 42 may have a circular cross-sectional geometry when viewed, for example, in a reference plane perpendicular to the axis 26.

The case mount 30 has an axial thickness 52 that extends axially along the axis 26 from an axial first side 54 of the case mount 30 to an axial second side 56 of the case mount 30, where the case mount second side 56 is arranged axially opposite the case mount first side 54 along the axis 26. The case mount aperture 44 is configured as a through-hole in the case mount 30. More particularly, the case mount aperture 44 extends axially along the axis 26 through the case mount 30 between the opposing axial case mount sides 54 and 56. This case mount aperture 44 may have a circular cross-sectional geometry when viewed, for example, in the reference plane.

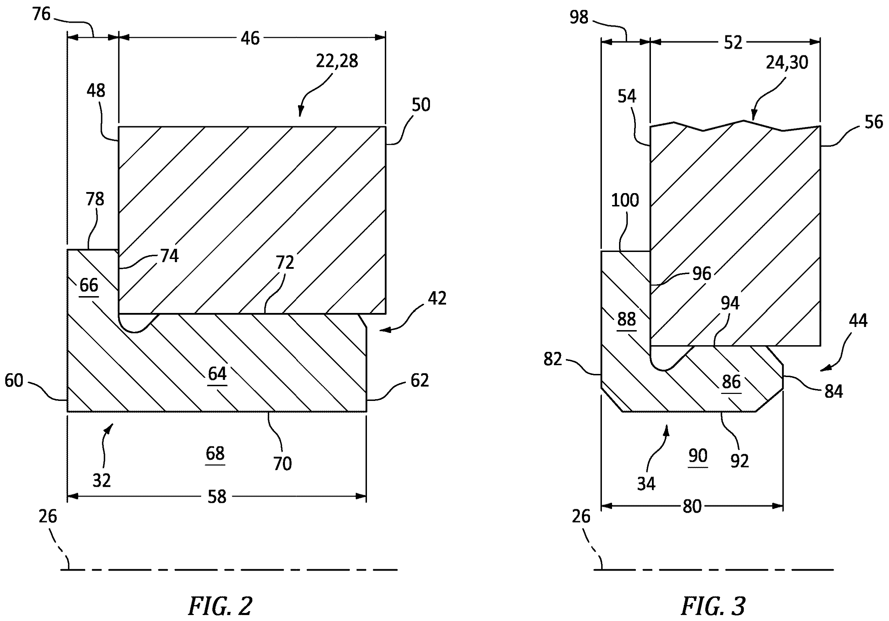

Referring to FIG. 2, the assembly tank mount bushing 32 has an axial thickness 58 that extends axially along the axis 26 from an axial first end 60 of the assembly tank mount bushing 32 to an axial second end 62 of the assembly tank mount bushing 32, where the tank mount bushing second end 62 is arranged axially opposite the tank mount bushing first end 60 along the axis 26. The assembly tank mount bushing 32 of FIG. 2 includes a tank mount bushing base 64, a tank mount bushing rim 66 and a tank mount bushing bore 68.

The tank mount bushing base 64 extends axially along the axis 26 from the tank mount bushing first end 60 to the tank mount bushing second end 62. The tank mount bushing base 64 extends radially between a radial inner side 70 of the assembly tank mount bushing 32 and its tank mount bushing base 64 to a radial outer side 72 of the tank mount bushing base 64. The tank mount bushing base 64 extends circumferentially about (e.g., completely around) the axis 26, providing the tank mount bushing base 64 with a full-hoop (e.g., tubular) geometry. With this arrangement, the tank mount bushing inner side 70 forms a radial outer peripheral boundary of the tank mount bushing bore 68 as the tank mount bushing bore 68 extends axially along the axis 26 through the assembly tank mount bushing 32 and its tank mount bushing base 64. This tank mount bushing bore 68 may have a circular cross-sectional geometry when viewed, for example, in the reference plane.

The tank mount bushing rim 66 is connected to (e.g., formed integral with or otherwise attached to) the tank mount bushing base 64 at the tank mount bushing first end 60. The tank mount bushing rim 66 of FIG. 2, for example, extends axially along the axis 26 and the tank mount bushing base 64 from the tank mount bushing first end 60 to an axial second end 74 of the tank mount bushing rim 66. This tank mount bushing rim second end 74 is axially recessed from the tank mount bushing second end 62 by an axial distance which is sized smaller than the tank mount thickness 46. The tank mount bushing rim 66 has an axial thickness 76 that extends axially along the axis 26 from the tank mount bushing first end 60 to the tank mount bushing rim second end 74. The tank mount bushing rim 66 projects radially out from the tank mount bushing base 64 to a radial outer distal side 78 of the tank mount bushing rim 66. The tank mount bushing rim 66 extends circumferentially about (e.g., completely around) the axis 26, providing the tank mount bushing rim 66 with a full-hoop (e.g., annular) geometry.

Referring to FIG. 3, the assembly case mount bushing 34 has an axial thickness 80 that extends axially along the axis 26 from an axial first end 82 of the assembly case mount bushing 34 to an axial second end 84 of the assembly case mount bushing 34, where the case mount bushing second end 84 is arranged axially opposite the case mount bushing first end 82 along the axis 26. The assembly case mount bushing 34 of FIG. 3 includes a case mount bushing base 86, a case mount bushing rim 88 and a case mount bushing bore 90.

The case mount bushing base 86 extends axially along the axis 26 from the case mount bushing first end 82 to the case mount bushing second end 84. The case mount bushing base 86 extends radially between a radial inner side 92 of the assembly case mount bushing 34 and its case mount bushing base 86 to a radial outer side 94 of the case mount bushing base 86. The case mount bushing base 86 extends circumferentially about (e.g., completely around) the axis 26, providing the case mount bushing base 86 with a full-hoop (e.g., tubular) geometry. With this arrangement, the case mount bushing inner side 92 forms a radial outer peripheral boundary of the case mount bushing bore 90 as the case mount bushing bore 90 extends axially along the axis 26 through the assembly case mount bushing 34 and its case mount bushing base 86. This case mount bushing bore 90 may have a circular cross-sectional geometry when viewed, for example, in the reference plane.

The case mount bushing rim 88 is connected to (e.g., formed integral with or otherwise attached to) the case mount bushing base 86 at the case mount bushing first end 82. The case mount bushing rim 88 of FIG. 3, for example, extends axially along the axis 26 and the case mount bushing base 86 from the case mount bushing first end 82 to an axial second end 96 of the case mount bushing rim 88. This case mount bushing rim second end 96 is axially recessed from the case mount bushing second end 84 by an axial distance which is sized smaller than the case mount thickness 52. The case mount bushing rim 88 has an axial thickness 98 that extends axially along the axis 26 from the case mount bushing first end 82 to the case mount bushing rim second end 96. The case mount bushing rim 88 projects radially out from the case mount bushing base 86 to a radial outer distal side 100 of the case mount bushing rim 88. The case mount bushing rim 88 extends circumferentially about (e.g., completely around) the axis 26, providing the case mount bushing rim 88 with a full-hoop (e.g., annular) geometry.

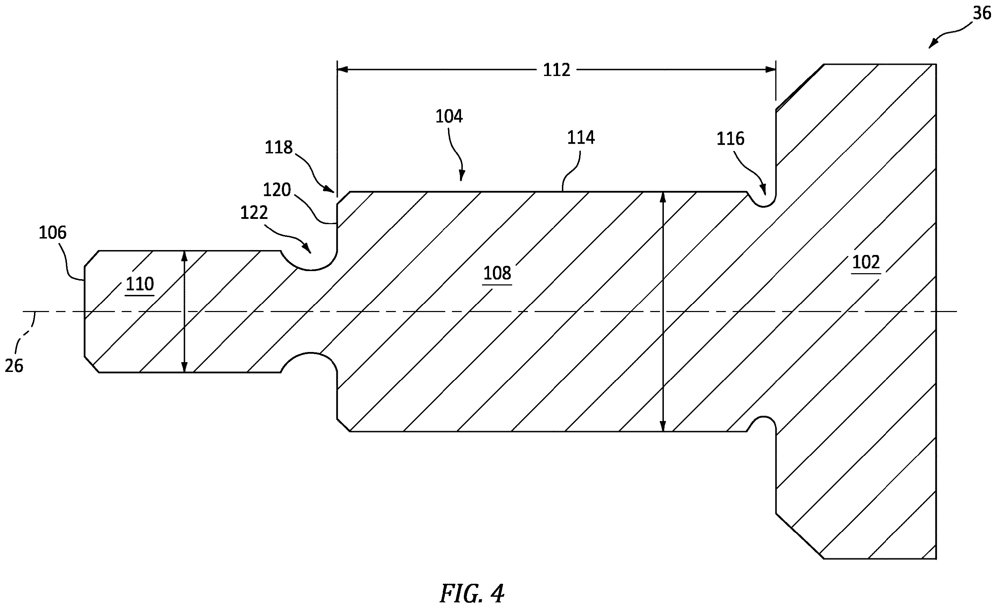

Referring to FIG. 4, the assembly fastener 36 may be configured as a shoulder bolt. The assembly fastener 36 of FIG. 4, for example, includes a fastener head 102 and a fastener shank 104 that projects axially along the axis 26 out from the fastener head 102 to an axial distal end 106 of the assembly fastener 36 and its fastener shank 104. The fastener shank 104 of FIG. 4 includes an axial shoulder section 108 and an axial threaded section 110.

The shoulder section 108 is axially between and connected to (e.g., formed integral with or otherwise attached to) the fastener head 102 and the threaded section 110. The shoulder section 108 has an axial length 112 that extends axially along the axis 26 from the fastener head 102 to the threaded section 110. This shoulder section length 112 is sized larger than a sum of the tank mount bushing thickness 58 (see FIG. 2) and the case mount bushing thickness 80 (see FIG. 3). The shoulder section 108 projects axially out from the axis 26 to a radial outer surface 114 (e.g., a cylindrical surface) of the shoulder section 108. An axial length of this shoulder section outer surface 114 may be (e.g., slightly) less than the shoulder section length 112. For example, the shoulder section 108 may include a groove 116 between the shoulder section outer surface 114 and the fastener head 102. The shoulder section 108 may also or alternatively include a chamfered corner 118 at a distal axial end 120 of the shoulder section 108. The shoulder section axial end 120 of FIG. 4 is formed by an annular surface which is perpendicular to the axis 26.

The threaded section 110 projects axially out from the shoulder section axial end 120 to the fastener distal end 106. At least a majority (e.g., 70%, 80%, 90% or more) of a radial outer periphery of the threaded section 110 is cut with threads. However, the threaded section 110 may also include a groove 122 axially between the threads and the shoulder section axial end 120 to facilitate the cutting of the threads.

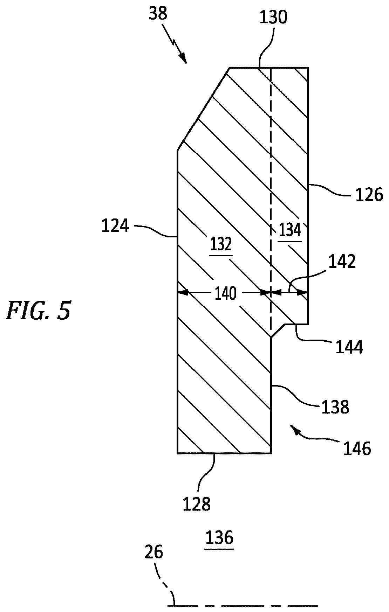

Referring to FIG. 5, the assembly washer 38 extends axially along the axis 26 from an axial first end 124 of the assembly washer 38 to an axial second end 126 of the assembly washer 38, where the washer second end 126 is arranged axially opposite the washer first end 124 along the axis 26. The assembly washer 38 extends radially from a radial inner side 128 of the assembly washer 38 to a radial outer side 130 of the assembly washer 38. The assembly washer 38 of FIG. 5 includes a washer base 132, a washer shoulder 134 and a washer bore 136. The assembly washer 38 and each of its washer members 132 and 134 extend circumferentially about (e.g., completely around) the axis 26, providing the assembly washer 38 of FIG. 5 and its washer members 132 and 134 with full-hoop (e.g., annular) geometries.

The washer base 132 extends axially along the axis 26 from the washer first end 124 to an axial second end 138 of the washer base 132. This washer base second end 138 is axially recessed from the washer second end 126. The washer base 132 has an axial thickness 140 that extends axially along the axis 26 between the washer first end 124 and the washer base second end 138. The washer base 132 extends radially from the washer inner side 128 to the washer outer side 130. With this arrangement, the washer inner side 128 forms a radial outer peripheral boundary of the washer bore 136 as the washer bore 136 extends axially along the axis 26 through the assembly washer 38 and its washer base 132. This washer bore 136 may have a circular cross-sectional geometry when viewed, for example, in the reference plane.

The washer shoulder 134 is connected to (e.g., formed integral with or otherwise attached to) the washer base 132 at the washer second end 126 and the washer outer side 130. The washer shoulder 134 of FIG. 5, for example, projects axially out from the washer base 132 along the axis 26 to the washer second end 126. The washer shoulder 134 has an axial thickness 142 that extends axially along the axis 26 between the washer base 132 and the washer second end 126. This washer shoulder thickness 142 may be equal to or different (e.g., less) than the washer base thickness 140. The washer shoulder 134 extends radially from a radial inner side 144 of the washer shoulder 134 to the washer outer side 130. The washer shoulder inner side 144 is radially recessed outward from the washer inner side 128 providing a counterbore 146 in the assembly washer 38.

Referring to FIG. 1, during installation of the mounting assembly 20, the assembly tank mount bushing 32 is mated with the tank mount aperture 42 to mount the assembly tank mount bushing 32 to the tank mount 28. The tank mount bushing base 64, for example, is inserted axially into the tank mount aperture 42, and the tank mount bushing rim 66 is axially engaged with (e.g., abutted against) the tank mount first side 48. Here, the tank mount bushing base 64 projects partially axially into the tank mount aperture 42 to its tank mount bushing second end 62 where the tank mount bushing second end 62 is (e.g., slightly) axially recessed from the tank mount second side 50. The assembly tank mount bushing 32 and its tank mount bushing base 64 may be fixed to the tank mount 28 through a radial interference fit; e.g., a press fit / a tight fit between the members 28 and 64. This fixed connection may prevent or significantly reduce axial and rotational movement between the assembly tank mount bushing 32 and the tank mount 28.

The assembly case mount bushing 34 is mated with the case mount aperture 44 to mount the assembly case mount bushing 34 to the case mount 30. The case mount bushing base 86, for example, is inserted axially into the case mount aperture 44, and the case mount bushing rim 88 is axially engaged with (e.g., abutted against) the case mount first side 54. Here, the case mount bushing base 86 projects partially axially into the case mount aperture 44 to its case mount bushing second end 84 where the case mount bushing second end 84 is (e.g., slightly) axially recessed from the case mount second side 56. The assembly case mount bushing 34 and its case mount bushing base 86 may be fixed to the case mount 30 through a radial interference fit; e.g., a press fit / a tight fit between the members 30 and 86. This fixed connection may prevent or significantly reduce axial and rotational movement between the assembly case mount bushing 34 and the case mount 30.

The assembly fastener 36 is mated with the assembly tank mount bushing 32 and the assembly case mount bushing 34. The fastener distal end 106, for example, is passed sequentially axially through the case mount bushing bore 90 and the tank mount bushing bore 68. The shoulder section 108 is thereby inserted sequentially into and through the case mount bushing bore 90 and the tank mount bushing bore 68 until, for example, the fastener head 102 axially engages the case mount 30 and its case mount second side 56. Here, the assembly tank mount bushing 32 and the assembly case mount bushing 34 may be loose fit mounted onto the assembly fastener 36 and its shoulder section 108.

The assembly washer 38 is mounted onto the assembly fastener 36 and its threaded section 110. The threaded section 110, for example, is inserted into and passed through the washer bore 136. The assembly nut 40 is subsequently threaded onto the threaded section 110 to axially clamp the assembly washer 38 and its washer base 132 axially between the assembly nut 40 and the shoulder section axial end 120. The assembly washer 38 and its washer base 132 are thereby axially between and next to the assembly nut 40 and the shoulder section 108. Moreover, the assembly washer 38 and its washer base 132 axially engage (e.g., contact) the assembly nut 40 and the shoulder section 108. By contrast, the washer shoulder 134 is disposed radially outboard of, axially overlaps and circumscribes the shoulder section 108 at its shoulder section axial end 120. Here, an axial distance 148 extending axially along the axis 26 from the washer second end 126 to the fastener head 102 is sized larger than a sum of the tank mount bushing rim thickness 76 (see FIG. 2), the tank mount thickness 46, the case mount bushing rim thickness 98 (see FIG. 3) and the case mount thickness 52; e.g., a stack dimension. With this arrangement, the tank mount 28 may be coupled to the case mount 30 without axially clamping the tank mount 28 and the case mount 30 between the fastener head 102 and the assembly washer 38.

In the arrangement of FIG. 1, the fastener head 102 is disposed axially next to (e.g., without another element axially in-between) the assembly case mount bushing 34 and its case mount bushing second end 84. The case mount 30 is thereby captured axially between the fastener head 102 and the case mount bushing rim 88. The assembly case mount bushing 34 and its case mount bushing rim 88 are disposed axially next to (e.g., without another element axially in-between) and are axially engageable with the tank mount 28 and its tank mount second side 50. The tank mount 28 is thereby captured axially between (1) the assembly case mount bushing 34 and its case mount bushing rim 88 and (2) the assembly tank mount bushing 32 and its tank mount bushing rim 66.

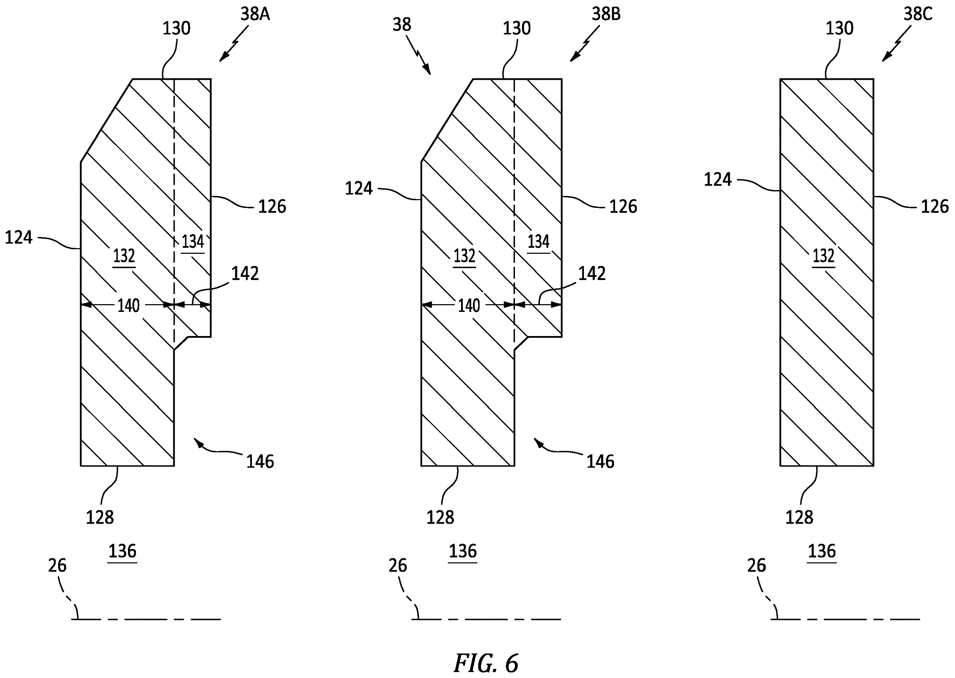

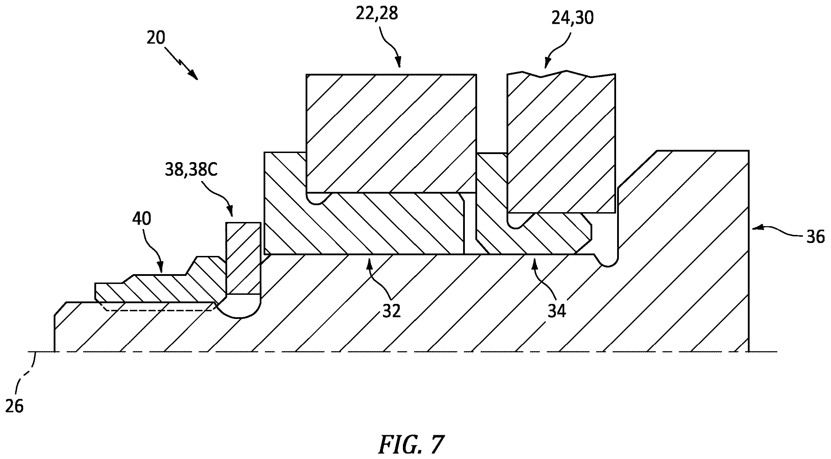

Due to manufacturing tolerances, the dimensions of the mounting assembly members 28, 30, 32 and 34 may slightly vary within those tolerance. However, relative axial movement between the tank mount 28 and the case mount 30 is ideally minimized to prevent or reduce premature wear of the mounting assembly 20. Therefore, it is contemplated the assembly washer 38 mounted onto the assembly fastener 36 may be one of a plurality of available assembly washers 38A-C (generally referred to as "38") as shown, for example, in FIG. 6. Each of the assembly washers 38 in FIG. 6 is provided with a different configuration. For example, the washer shoulder thickness 142 of the assembly washer 38A is different than the washer shoulder thickness 142 of the assembly washer 38B. The assembly washer 38C, on the other hand, is configured as a flat washer without a shoulder section. In other words, the assembly washer 38C has a uniform thickness from its washer inner side 128 to its washer outer side 130. By providing the different assembly washers 38A, 38B and 38C, installation personnel may select which of these assembly washers 38 will best satisfy an installation specification based on the measured stack dimension. FIG. 7 illustrates the mounting assembly 20 with the assembly washer 38C; e.g., the flat washer. Here, no portion of the assembly washer 38C axially overlaps nor circumscribes the shoulder section 108.

The mounting assembly 20 of FIGS. 1 and 7 may facilitate provision of a control gap throughout powerplant operation. Here, axial movement between the first component 22 and the second component 24 may be reduced, while remains positive. In other words, the control gap for the mounting assembly 20 is reduced, but may still remain throughout powerplant operation. This control gap may be located at a single location or may be collectively formed by gaps at multiple locations. These one or more gap locations may be disposed between (a) elements 60 and 126, (b) between elements 50 and 82, and/or (c) between element 56 and a face of element 102. Provision of the control gap along with the loose fit of the fastener 36 within the bores 68 and 90 may facilitate (e.g., minimal) bending without binding up as the arrangement goes through different phases and/or conditions; e.g., thermal growth, engine carcase bending, external loading, vibrations, etc.

While FIGS. 1 and 7 illustrate the case mount 30 between the fastener head 102 and the tank mount 28, the present disclosure is not limited to such an exemplary arrangement. It is contemplated, for example, arrangements of the case mount 30 and the tank mount 28 may be reversed.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
a fluid reservoir structure comprising a first mount (28), the first mount (28) comprising a first mount aperture (42) that extends axially along an axis (26) through the first mount (28) from a first mount first side to a first mount second side;
an aircraft engine housing structure comprising a second mount (30), the second mount (30) comprising a second mount aperture (44) that extends axially along the axis (26) through the second mount (30) from a second mount first side to a second mount second side; and
a mounting assembly (20) connecting the first mount (28) to the second mount (30) while providing controlled intercomponent movement between the first mount (28) and the second mount (30) to reduce internal stress and/or wear, the mounting assembly (20) including a first bushing (32), a second bushing (34) and a fastener (36);
the first bushing (32) including a first bushing bore (68), a first bushing base (64) and a first bushing rim (66) that projects radially out from the first bushing base (64), the first bushing base (64) projecting partially axially into the first mount aperture (42) without contacting the second bushing (34), and the first bushing rim (66) axially next to the first mount first side;
the second bushing (34) including a second bushing bore (90), a second bushing base (86) and a second bushing rim (88) that projects radially out from the second bushing base (86), the second bushing base (86) projecting partially axially into the second mount aperture (44), and the second bushing rim (88) axially next to and between the first mount second side and the second mount first side; and
the fastener (36) projecting axially through the first bushing bore (68) and the second bushing bore (90).

2. The assembly of claim 1, wherein the first bushing base (64) is fixed to the first mount (28) through a radial interference fit.

3. The assembly of claim 1 or 2, wherein the second bushing base (86) is fixed to the second mount (30) through a radial interference fit.

4. The assembly of claim 1, 2 or 3, wherein the first mount (28) is axially captured between the first bushing rim (66) and the second bushing rim (88).

5. The assembly of any preceding claim, wherein the fastener (36) includes:
a head (102) axially next to the second mount second side; and
a shank (104) projecting axially out from the head (102) and through the first bushing bore (68) and the second bushing bore (90).

6. The assembly of claim 5, wherein:
the shank (104) includes a threaded section (110) and a shoulder section (108) projecting axially through the first bushing bore (68) and the second bushing bore (90) from the head (102) to the threaded section (110); and
the mounting assembly (20) further includes a nut (40) threaded onto the threaded section (110) with the first bushing (32) axially captured between the nut (40) and the first mount (28).

7. The assembly of claim 6, wherein:
the mounting assembly (20) further includes a washer (38) axially next to and between the nut (40) and an end (120) of the shoulder section (108); and
the first bushing (32) is axially next to and between the washer (38) and the first mount (28),
wherein, optionally, the washer (38) is axially clamped between the nut (40) and the end of the shoulder section (108).

8. The assembly of claim 7, wherein:
the shoulder section (108) has an axial length (112); and
a sum of an axial thickness (76) of the first bushing rim (66), an axial thickness (46) of the first mount (28), an axial thickness (98) of the second bushing rim (88) and an axial thickness (52) of the second mount (30) is less than the axial length (112) of the shoulder section (108).

9. The assembly of claim 7 or 8, wherein the washer (38) has a uniform axial thickness extending radially from an inner side of the washer (38) to an outer side of the washer (38).

10. The assembly of claim 7, 8 or 9, wherein:
the washer includes a washer base (132) and a washer shoulder (134);
the washer base (132) is axially between and engages the nut (40) and the end (120) of the shoulder section (108); and
the washer shoulder (134) projects axially out from the washer base (132) towards the first bushing (32), and the washer shoulder (134) circumscribes the shoulder section (108),
wherein, optionally, the washer shoulder (134) is operable to axially contact the first bushing (32).

11. The assembly of claim 10, wherein an axial thickness (140) of the washer base (132) is greater than an axial thickness (142) of the washer shoulder (134).

12. An aircraft assembly for providing controlled intercomponent movement to reduce internal stress and/or wear, the aircraft assembly comprising:
a shoulder fastener (36) including a head (102), a shoulder section (108) and a threaded section (110), the shoulder section (108) projecting axially along an axis (26) from the head (102) to the threaded section (110);
a first bushing (32) having a first bushing axial thickness (58) that extends axially from a first bushing first end to a first bushing second end, the first bushing (32) including a first bushing base (64) and a first bushing rim (66) disposed at the first bushing first end, the first bushing base (64) mounted on the shoulder section (108), and the first bushing rim (66) projecting radially out from and circumscribing the first bushing base (64);
a second bushing (34) having a second bushing axial thickness (80) that extends axially from a second bushing first end to a second bushing second end, the second bushing (34) including a second bushing base (86) and a second bushing rim (88) disposed at the second bushing first end, the second bushing base (86) mounted on the shoulder section (108), the second bushing rim (88) projecting radially out from and circumscribing the second bushing base (86), the second bushing first end located axially next to the first bushing second end, and the second bushing second end located axially next to the head (102);
a nut (40) threaded onto the threaded section (110); and
a washer (38) clamped between the nut (40) and an axial end (120) of the shoulder section (108), the washer (38) axially next to the first bushing first end, wherein an axial distance (148) extending from the washer (38) to the head (102) is greater than a sum of the first bushing axial thickness (58) and the second bushing axial thickness (80),
wherein, optionally, the washer (38) comprises a flat washer.

13. The aircraft assembly of claim 12, wherein:
a portion of the washer (38) axially overlaps and circumscribes the shoulder section (108); and
the axial distance (148) extends from the portion of the washer (38) to the head (102).

14. The aircraft assembly of claim 12 or 13, further comprising:
a first mount (28) comprising a first mount aperture (42), the first bushing base (64) projecting axially into the first mount aperture (42), the first bushing rim (66) axially engaging the first mount (28), and the first mount (28) captured axially between the first bushing rim (66) and the second bushing (34); and
a second mount (30) comprising a second mount aperture (44), the second bushing base (86) projecting axially into the second mount aperture (44), the second bushing rim (88) axially engaging the second mount (30), and the second mount (30) captured axially between the second bushing rim (88) and the head (102),
wherein, optionally, the assembly further comprises:
a housing structure for an aircraft engine, the housing structure comprising one of the first mount (28) or the second mount (30); and/or
a fluid reservoir structure, the fluid reservoir structure comprising one of the first mount (28) or the second mount (30).

15. A method for attaching components together while providing controlled intercomponent movement to reduce internal stress and/or wear, the method comprising:
inserting a base (64) of a first bushing (32) into an aperture (42) in a first mount (28) with a rim (66) of the first bushing (32) axially engaging the first mount (28), the first mount (28) having a first mount axial thickness (46), and the rim (66) of the first bushing (32) having a first bushing rim axial thickness (76);
inserting a base (86) of a second bushing (34) into an aperture (44) in a second mount (30) with a rim (88) of the second bushing (34) axially engaging the second mount (30), the second mount (30) having a second mount axial thickness (52), and the rim (88) of the second bushing (34) having a second bushing rim axial thickness (98);
inserting a shoulder section (108) of a fastener (36) through a bore of the first bushing (32) and a bore of the second bushing (34), a head (102) of the fastener (36) axially next to the second mount (30), and the rim (88) of the second bushing (34) axially next to the first mount (28);
determining a stack dimension, the stack dimension equal to a sum of the first mount axial thickness (46), the first bushing rim axial thickness (76), the second mount axial thickness (52) and the second bushing rim axial thickness (98);
selecting a washer (38) out of a set of washers with different configurations based on the stack dimension;
mounting the washer (38) on a threaded section (110) of the fastener (36), the washer (38) axially next to the first bushing (32); and
threading a nut (40) onto the threaded section (110) of the fastener (36) to axially clamp the washer (38) between the nut (40) and an axial end (120) of the shoulder section (108) of the fastener (36).
